# EUROPÄISCHE PATENTSCHRIFT

(11) **EP 2 418 714 B1**
(45) Veröffentlichungstag und Bekanntmachung des Hinweises auf die Patenterteilung: **01.07.2015**
(21) Anmeldenummer: 11006527.3
(22) Anmeldetag: 09.08.2011
(51) Int. Cl.: H01M 2/20, H01M 10/04, H01M 10/6555, H01M 10/6557, H01M 10/613, H01M 10/615, H01M 10/647, H01M 10/6553

(54) **Temperierkreislauf für einen Akkupack**
Tempering circuit for a battery pack
Circuit de thermorégulation d'une batterie

(30) Priorität: 09.08.2010 DE 102010033795
(43) Veröffentlichungstag der Anmeldung: 15.02.2012
(73) Patentinhaber: ads-tec GmbH, 72622 Nürtingen (DE)
(72) Erfinder: Speidel, Thomas, 71706 Markgröningen (DE)
(74) Vertreter: Wasmuth, Rolf

(56) Entgegenhaltungen:
- EP-A1- 2 405 527
- WO-A1-2006/135008
- WO-A1-2007/063877
- WO-A1-2009/060697
- JP-A- 2006 344 572

## Beschreibung

Die Erfindung betrifft einen Akkupack, bestehend aus einer Mehrzahl einzelner Akkuzellen, insbesondere Flachzellen, nach dem Oberbegriff des Anspruchs 1.

Zur Bereitstellung größerer elektrischer Leistungen werden Akkupacks aus einer Vielzahl von Akkuzellen in einem Akkublock zusammengefasst, wobei zur Erzielung einer ausreichend hohen Ausgangsspannung die Zellen in Reihe geschaltet werden. Wechselweise werden die Anodenableiter und Kathodenableiter benachbarter Akkuzellen miteinander verbunden, wobei gewährleistet sein muss, dass die elektrische Verbindung hochstromfest ist, da bei der Verwendung in Kraftfahrzeugen hohe Spitzenströme auftreten können.

Jede Akkuzelle entwickelt sowohl bei der Stromabgabe als auch bei der Stromaufnahme Wärme, die zu einer erhöhten Temperatur des gesamten Akkublocks führen kann. Um Schädigungen der Akkuzellen und/oder des Akkublocks zu vermeiden, muss sowohl beim Entladen als auch beim Laden anfallende Verlustwärme abgeführt werden.

**Aus der** WO 2009/060697 A1 **ist ein Akkupack aus bipolaren Zellen bekannt, deren Pole hohl sind und von einem Kühlmedium wie Methylalkohol, Ethylalkohol, Wasser o. dgl. durchflossen sind, um Wärme abzuführen.**

**Die** WO 2007/063877 A1 **schlägt einen Verbinder für die Ableiter von Pouchzellen vor, der aus einem elektrisch leitenden Hohlkörper gebildet ist, auf dem die Ableiter festgeschweißt werden. Während dem Schweißvorgang und im elektrischen Betrieb der Anordnung kann zur Abfuhr von Wärme durch den inneren Hohlraum eines Verbinders kühle Luft geblasen werden.**

**Auch in der** JP 2006-344572 A1 **wird vorgeschlagen, die Ableiter von Pouchzellen durch Festschweißen auf einem Verbinder elektrisch miteinander zu kontaktieren, wobei während des Schweißens der hohl ausgebildete Verbinder einen Abzug zur Abfuhr von Wärme bildet.**

**In der** WO 2006/135008 A1 **ist vorgeschlagen, einen aus gestapelten Pouchzellen gebildeten Akkupack durch Einblasen von Luft in den Zwischenraum nebeneinander liegender Pouchzellen zu kühlen.**

**Aus der nachveröffentlichten** EP 2 405 527 A1 **ist eine Anordnung aus Akkuflachzellen bekannt, die jeweils einen Kathodenableiter und einen Anodenableiter aufweisen, wobei je zwei Ableiter benachbarter Akkuflachzellen über ein Temperierelement elektrisch leitend miteinander verbunden sind. Der Grundkörper des Temperierelementes ist hohl und steht an seinen Enden mit Kühlmittel zuführenden und Kühlmittel abführenden Rohren in Verbindung, die aus einem elektrisch isolierenden Material bestehen können.**

Der Erfindung liegt die Aufgabe zugrunde, einen Akkupack aus einer Mehrzahl einzelner Akkuzellen derart auszubilden, dass **bei geringem Aufwand** die im Betrieb anfallende Abwärme sicher abgeführt werden kann.

Die Aufgabe wird erfindungsgemäß nach den kennzeichnenden Merkmalen des Anspruchs 1 gelöst.

Die Ableiter liegen an einem elektrisch leitenden Temperierelement an, dessen Grundkörper hohl ist. Die hohlen Grundkörper mehrerer Temperierelemente werden zusammen mit elektrisch isolierenden Kanalabschnitten zu einem gemeinsamen Temperierkreislauf zusammengefügt, so dass über den Temperierkreislauf im Bereich der Ableiter mittels eines wärmeübertragenden Mediums Wärme abgeführt oder zugeführt werden kann. Das Gehäuse des Akkublocks ist dabei trocken, d. h. nicht von dem Wärmeträgermedium durchströmt.

Neben dem Abführen von Wärme ist insbesondere bei auf Lithium basierenden Akkuzellen die Einhaltung einer optimalen Betriebstemperatur zweckmäßig, was mit dem erfindungsgemäßen Temperierkreislauf in einfacher Weise möglich ist.

Die Anordnung ist so getroffen, dass die Ableiter der Zellen eine Bodenplatte aus einem elektrisch isolierenden Material durchragen, wobei auf der Bodenplatte mehrere Temperierelemente aufsitzen. Vorteilhaft sind mehrere Temperierelemente in einem gemeinsamen Träger aus einem elektrisch isolierenden Material gehalten, wobei die Kanalabschnitte des Temperierkreislaufs zwischen dem Träger und der Bodenplatte ausgebildet sind. Hierzu ist der Kanalteil im Träger zur Bodenplatte hin offen; zweckmäßig hat er eine im Querschnitt etwa U-förmige oder V-förmige Gestalt. Der Kanalteil im Träger wird beim Zusammenbau des Deckels durch die Bodenplatte dichtend verschlossen, wodurch der Temperierkreislauf unter Einbeziehung der Kanalabschnitte in den Temperierelementen gebildet ist.

Die Ausbildung des Temperierkreislaufs kann dabei so getroffen sein, dass die Einlässe einer Reihe von nebeneinanderliegenden Temperierelementen parallel von einem gemeinsamen Zuführkanal gespeist werden. Entsprechend münden die Auslässe einer Reihe von nebeneinanderliegenden Temperierelementen parallel in einen gemeinsamen Abführkanal.

Es kann zweckmäßig sein, alle Auslässe aller Temperierelemente in einem gemeinsamen Abführkanal münden zu lassen; zweckmäßig werden dann alle Einlässe aus einem zentralen Zuführkanal versorgt.

Es kann vorteilhaft sein, die Kanäle der Temperierelemente zusammen mit den Kanalabschnitten aus elektrisch isolierendem Material zu einem mäanderförmig verlaufenden Temperierkreislauf zusammenzuschalten.

Das Material des Trägers und/oder das Material des Bodens bestehen aus Kunststoff, wodurch auf einfache Weise elektrisch isolierende Kanalabschnitte ausgebildet sind. Dabei sind die Grundkörper der Temperierelemente vorteilhaft in den Träger eingespritzt. Um eine einfache Entformung zu gewährleisten, sind die Grundkörper der Temperierelemente zur Bodenplatte hin offen. Insbesondere erweitern sich die Grundkörper der Temperierelemente zum Boden hin, was eine einfache Entformung erleichtert.

Ein an der Bodenplatte vorgesehener Steg greift in den offenen Grundkörper eines Temperierelementes ein und stützt dessen Seitenwände gegen kontaktierende Klemmkräfte ab. Der Steg greift in den Grundkörper insbesondere dichtend ein, wodurch in dem hohlen Temperierelement ein mediumführender Kanalabschnitt des Temperierkreislaufs ausgebildet ist.

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: in schematischer Darstellung einen Akkublock mit einem in einem Gehäuse angeordneten Akkupack aus einer Mehrzahl von Akkuzellen,
- Fig. 2: einen schematischen Längsschnitt durch den Akkublock nach Fig. 1,
- Fig. 3: eine perspektivische, schematische Darstellung eines Teilakkupacks,
- Fig. 4: in schematischer, vergrößerter Darstellung den Kontaktbereich der Akkuzellen eines Akkupacks,
- Fig. 5: in schematischer, perspektivischer Darstellung eine Ansicht eines Trägers mit einer Vielzahl von Temperierelementen,
- Fig. 6: in schematischer, perspektivischer Ansicht einen Boden des Akkupacks nach Fig. 3,
- Fig. 7: einen Schnitt durch den Deckel des Akkublocks mit ausgebildeten Kanalabschnitten eines Temperierkreislaufs,
- Fig. 8: in schematischer Darstellung einen ersten Temperierkreislauf,
- Fig. 9: in schematischer Darstellung einen zweiten Temperierkreislauf,
- Fig. 10: in schematischer Darstellung einen dritten Temperierkreislauf.

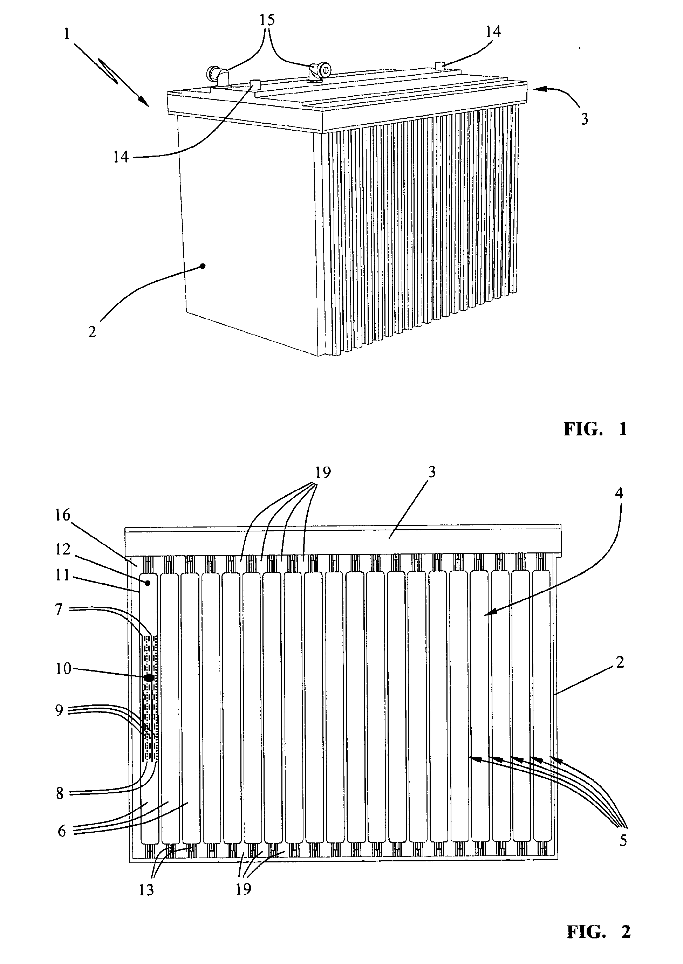

In Fig. 1 ist ein Akkublock 1 dargestellt, der ein Gehäuse 2 und einen das Gehäuse 2 verschließenden Deckel 3 aufweist. Wie sich aus dem Schnitt nach Fig. 2 ergibt, ist im Gehäuse 2 ein Akkupack 4 aus einer Vielzahl von Einzelzellen 5 angeordnet, die im Gehäuse 2 des Akkublocks 1 mechanisch fest gehalten sind. Im gezeigten Ausführungsbeispiel ist die Einzelzelle als Akkuflachzelle 6 aufgebaut, auch Pouchzelle genannt.

Wie in Fig. 2 an der linken Zelle 6 schematisch dargestellt, besteht diese aus einer Vielzahl von aufeinandergeschichteten Kathodenfolien 7 und Anodenfolien 8, die jeweils durch dazwischen angeordnete Separatorfolien 9 voneinander getrennt sind. Die Kathodenfolien sind mit einem Kathodenableiter 17 und die Anodenfolien mit einem Anodenableiter 18 verbunden. Das Folienpaket 10 ist in eine Gehäusefolie 11 eingeschlagen, welche ein Foliengehäuse 12 bildet. Das Foliengehäuse ist umlaufend dicht verschlossen, z. B. durch eine umlaufende Siegelnaht 13. Im Foliengehäuse 12 ist eine Elektrolytlösung eingefüllt.

Die meist aus einer Kupferfolie bestehende Anodenfolie 8 ist innerhalb des Foliengehäuses 12 mit dem Anodenableiter 18 verbunden, der durch die Siegelnaht 13 nach außen geführt ist. Entsprechend ist die vorzugsweise aus einer Aluminiumfolie bestehende Kathodenfolie 7 im Foliengehäuse 12 mit dem Kathodenableiter 17 elektrisch leitend verbunden, der ebenfalls durch die Siegelnaht 13 nach außen geführt ist.

Das Gehäuse 2 des Akkublocks 1 ist durch den Deckel 3 vorzugsweise gas- und flüssigkeitsdicht verschlossen, wobei im Deckel 3 die elektrischen Anschlusspole 14 des Akkublocks 1 nach außen geführt sind.

Am Deckel 3 sind ferner Anschlüsse 15 eines Temperierkreislaufs vorgesehen, über die der Akkublock 1 an ein strömendes Medium angeschlossen ist, über das Verlustwärme aus dem Akkublock 1 abgeführt oder bei zu niedrigen Temperaturen dem Akkublock 1 Wärme zugeführt werden kann.

Der Innenraum 16 des Akkugehäuses 2 ist aufgrund der mechanisch im Gehäuse 2 gehaltenen Akkuflachzellen 6 in eine Vielzahl von Hohlräumen 19 aufgeteilt. Zweckmäßig ist vorgesehen, dass die Hohlräume 19 des Innenraums 16 untereinander in mittelbarer oder unmittelbarer Strömungsverbindung stehen. Vorzugsweise stehen alle Hohlräume 19 des Innenraums 16 eines Akkugehäuses 2 miteinander in mittelbarer oder unmittelbarer Strömungsverbindung, wobei vorteilhaft auch die Hohlräume des Deckels eingeschlossen sind.

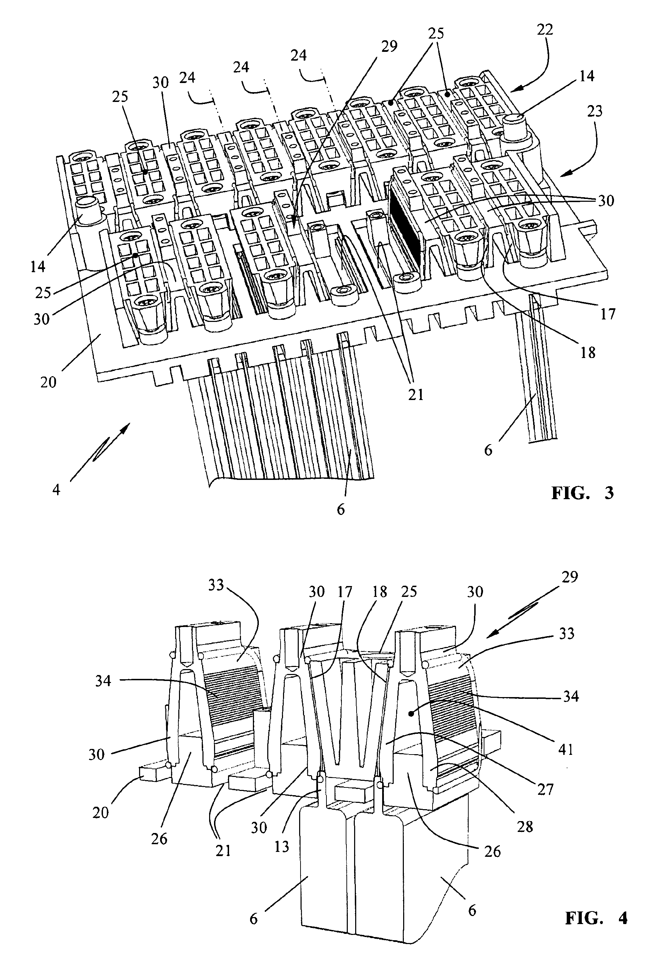

Die in Fig. 3 gezeigten Akkuflachzellen 6 durchragen mit ihren Ableitern 17, 18 - vgl. auch Fig. 3 - eine Bodenplatte 20 des Deckels 3 und werden über einen Klemmkeil 25 an ein jeweils zugeordnetes Temperierelement 30 elektrisch kontaktierend angedrückt. Im gezeigten Ausführungsbeispiel nach Fig. 3 sind zwölf Zellen 6 über auf der Bodenplatte 20 abgestützte Temperierelemente 30 miteinander kontaktiert. Die Ableiter 17 und 18 einer Akkuflachzelle 6 durchragen in der Bodenplatte 20 ausgebildete Schlitze 21 angepasster Größe, wobei zwischen zwei Ableitern benachbarter Zellen 6 jeweils ein Temperierelement 30 angeordnet ist. Die Temperierelemente 30 einer Reihe 22 bzw. 23 liegen - wie Fig. 3 zeigt - mit ihren Längsachsen 24 zueinander parallel, wobei ein zwischen den Temperierelementen 30 angeordneter Klemmkeil 25 aus elektrisch isolierendem Material die Ableiter 17 und 18 an einander benachbarte Temperierelemente 30 andrückt.

Wie die Figuren 3 und 4 zeigen, sind die Grundkörper 29 der Temperierelemente 30 zur Bodenplatte 20 offen ausgebildet, wobei der Grundkörper 29 aus einem elektrisch leitenden Material, insbesondere Aluminium besteht. Damit bildet ein Temperierelement 30 als Kontaktbrücke die elektrische Verbindung zwischen zwei Ableitern 17 und 18, wie in Fig. 4 dargestellt. Der Grundkörper 29 ist vorteilhaft ein Profilkörper, z. B. ein Stranggussprofil.

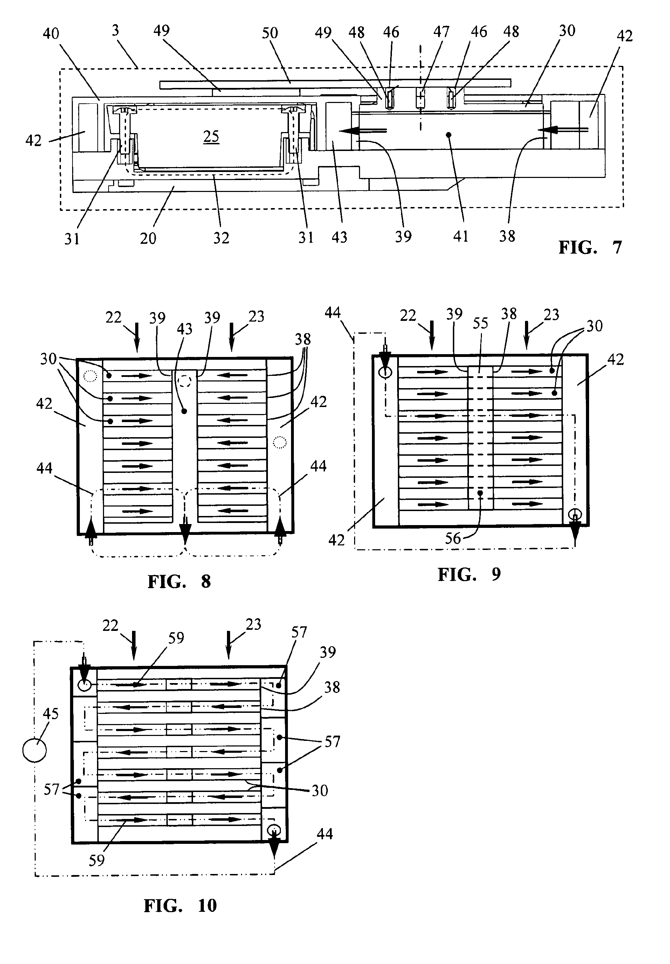

In die zur Bodenplatte 20 offenen Grundkörper 29 greift ein Steg 26 ein, der im Ausführungsbeispiel einteilig mit der Bodenplatte 20 ausgebildet ist. Durch den Steg 26 und die Seitenwände 27 und 28 des Profilkörpers 29 ist ein Kanal 41 ausgebildet, der sich von einer Stirnseite 35 zur anderen Stirnseite 36 des Grundkörpers 29 des Temperierelementes 30 erstreckt. Das hohle Temperierelement 30 bildet dabei einen Kanalabschnitt eines Temperierkreislaufs 44, wie er in den Figuren 8 bis 10 dargestellt ist. Dabei ist der Temperierkreislauf 44 ausschließlich innerhalb des Deckels 3 des Akkublocks 1 ausgebildet. Das Innengehäuse 16 ist trocken, d. h. nicht von dem Wärmeträgermedium durchflossen. Der Temperierkreislauf 44 umfasst nur den Bereich der Ableiter 17, 18; die Foliengehäuse 12 der Flachzellen 6 kommen mit dem Wärmeträgermedium nicht in Berührung. Ein Wärmeträgermedium aus einem elektrisch nicht-leitenden Stoff ist im Temperierkreislauf 44 geführt, während der Innenraum 16 außerhalb des Temperierkreislaufs 44 liegt, also frei von dem Wärmeträgermedium ist.

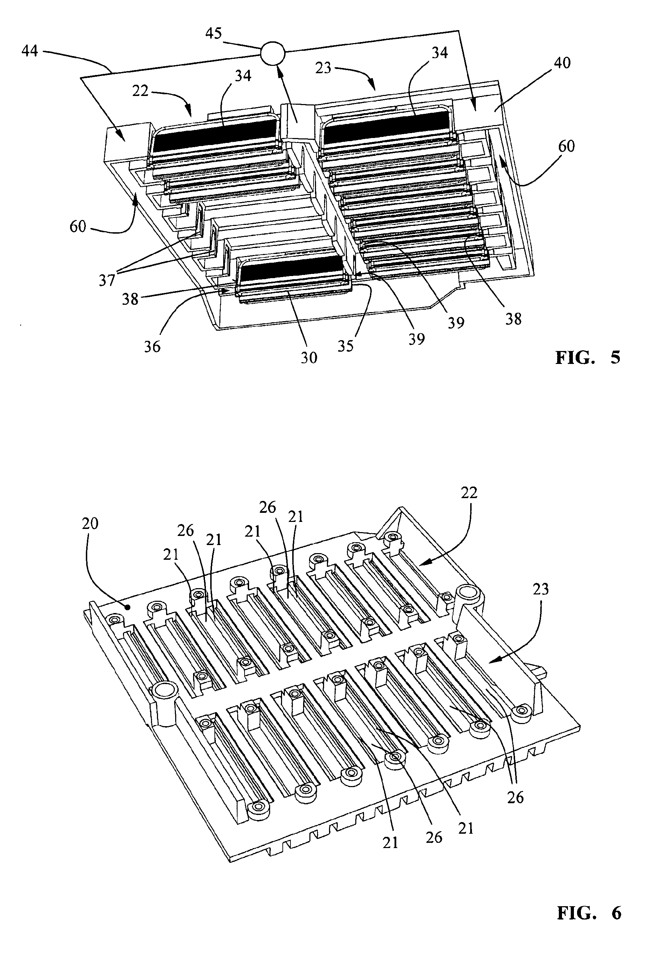

Mehrere Temperierelemente 30, insbesondere alle Temperierelemente eines Akkupacks 4 sind in einem Träger 40 angeordnet (Fig. 5), der aus einem elektrisch nicht-leitenden Material besteht, insbesondere aus Kunststoff. Zweckmäßig sind die Grundkörper 29 der Temperierelemente 30 in den Träger eingespritzt, wobei die Stirnseiten 35 und 36 jedes Temperierelementes 30 nach Art einer Aufnahme 37 vom Material des Trägers 40 umgriffen sind.

Der Träger 40 wird auf die Bodenplatte 20 (Fig. 6) aufgesetzt, wobei die in der Bodenplatte 20 ausgebildeten Stege 26 die offenen Grundkörper 29 verschließen, insbesondere dicht verschließen. Die Stege 26 stützen auch die Seitenwände 27 und 28 eines Grundkörpers 29 gegeneinander ab, so dass die zur Kontaktierung der Ableiter 17, 18 durch den Klemmekeil 25 aufgebrachten Klemmkräfte sicher abgestützt sind. Wie insbesondere Fig. 7 zeigt, ist der Klemmkeil 25 durch in die Bodenplatte 20 im Wesentlichen senkrecht eingeschraubte Befestigungsschrauben 31 an der Bodenplatte 20 fixiert, wodurch sich ein geschlossener Kraftfluss 32 ergibt, wie er in Fig. 7 dargestellt ist.

Zwischen dem Träger 40 und der Bodenplatte 20 sind das Wärmeträgermedium zuführende bzw. abführende Kanäle 42 und 43 ausgebildet. Dabei sind die Kanalabschnitte im Träger 40 aus einem isolierenden Material gebildet, so dass der Temperierkanal 41 in den Temperierelementen 30 über die nicht-leitenden Kanalabschnitte des Trägers 40/Bodenplatte 20 miteinander verbunden sind und einen gemeinsamen Temperierkreislauf 44 bilden. Die Kanalabschnitte bestehen aus einem im Träger 40 ausgebildeten Kanalteil 60, der zur Bodenplatte 20 hin offen ist. Der Kanalteil 60 hat im Querschnitt etwa U- bis V-förmige Gestalt und wird beim Zusammenbau von Träger 40 und Bodenplatte 20 durch die Bodenplatte selbst dichtend verschlossen.

Im Ausführungsbeispiel nach den Figuren 5 bis 8 ist die Anordnung so getroffen, dass die Einlässe 38 einer nebeneinanderliegenden Reihe 22 von Temperierelementen aus einem gemeinsamen Zuführungskanal 42 parallel mit einem Wärmeträgermedium wie Gas oder Flüssigkeit gespeist werden. Entsprechend münden die Auslässe 39 einer nebeneinanderliegenden Reihe 23 von Temperierelementen 30 parallel in einen gemeinsamen Abführkanal 43. Dabei kann es zweckmäßig sein, die Auslässe 39 aller Temperierelemente in einem gemeinsamen Abführkanal 43 münden zu lassen, so wie dies in Fig. 8 dargestellt ist.

Zur Ausbildung eines anderen vorteilhaften Temperierkreislaufs kann es zweckmäßig sein, dass ein Kanalabschnitt 55 des Temperierkreislaufs 44 den Auslass 39 eines Temperierelementes 30 einer ersten Reihe 22 mit dem Einlass 38 eines benachbarten Temperierelementes 30 einer zweiten Reihe 23 verbindet. Ein derartiger Temperierkreislauf ist in Fig. 9 dargestellt, wobei die Verbindung eines Auslasses 39 mit einem Einlass 38 über einen Kanalabschnitt 55 optional angegeben ist. Es kann auch zweckmäßig sein, zwischen den Kanälen der Temperierelemente 30 der Reihe 22 und den Kanälen in den Temperierelementen 30 der parallelen Reihe 23 einen Durchflussraum 56 auszubilden, in den alle Auslässe 39 münden und aus dem alle Einlässe 38 parallel gespeist werden.

In einer weiteren Ausgestaltung eines Temperierkreislaufs 44 ist eine mäanderartige Führung des Wärmeträgermediums vorteilhaft, wie Fig. 10 zeigt. Jeweils ein Durchflussraum 57 verbindet den auf einer gleichen Stirnseite liegenden Einlass 38 und Auslass 39 nebeneinanderliegender Temperierelemente 30, so dass die Strömung in den nebeneinanderliegenden Temperierelementen 30 gegenläufig ist. Der Strom 59 des Wärmeträgermediums mäandert von einem Zufluss zu einem Abfluss, wobei der Kreislauf durch eine Druckpumpe 45 unterstützt sein kann.

Die Temperierelemente 30 weisen eine den Träger 40 durchragende Rippe 49 auf (Fig. 7), die auf der der Bodenplatte 20 abgewandten Seite des Trägers 40 liegt. In der Rippe 49 sind Aufnahmen 46 für Thermoelemente 48 vorgesehen, wobei die Thermoelemente 48 der Temperierelemente 30 elektrisch mit einer Schaltung auf einer Platine 50 verbunden sind, die auf den Rippen 49 der Temperierelemente 30 aufliegt. In jeder Rippe sind zwei Aufnahmen 46 für zwei Thermoelemente 48 vorgesehen; ferner ist eine Schrauböffnung 47 in der Rippe ausgebildet, über die die Platine 50 auf den Rippen 49 festgeschraubt werden kann.

Zur Erzielung einer guten Kontaktierung mit den Ableitern 17, 18 ist auf einer der einander zugewandten Kontaktflächen, im Ausführungsbeispiel auf der Kontaktfläche 33 des Temperierelementes 30, eine Aufrauung in Form von Erhebungen 34 vorgesehen. Die Erhebungen können punktförmig oder - wie in Fig. 4 dargestellt - rippenartig sein und dringen bei gleichzeitiger Verformung in das Material eines angedrückten Ableiters 17, 18 ein, wodurch sich eine im weiteren Sinne stoffschlüssige Verbindung ergibt. Durch diese innige Verbindung zwischen dem Ableiter 17, 18 und der Kontaktfläche 33 ist eine hochstromfeste elektrische Verbindung geschaffen, die einen geringen Übergangswiderstand hat. Zugleich ist ein guter wärmeübertragender Kontakt zwischen dem Grundkörper 29 des Temperierelements 30 und dem anliegenden oder festgelegten Ableiter erzielt.

## Patentansprüche

1. Akkupack, bestehend aus einer Mehrzahl einzelner Akkuzellen (5), insbesondere Akkuflachzellen (6), die jeweils einen Kathodenableiter (17) und einen Anodenableiter (18) aufweisen, wobei je zwei Ableiter (17, 18) benachbarter Akkuzellen (5, 6) elektrisch leitend miteinander verbunden sind, wobei ein Ableiter (17, 18) an einem elektrisch leitenden Temperierelement (30) anliegt und der Grundkörper (29) des Temperierelementes (30) hohl ist,
**dadurch gekennzeichnet, dass** mehrere Temperierelemente (30) zusammen mit elektrisch isolierenden Kanalabschnitten einen gemeinsamen Temperierkreislauf (44) ausbilden, **wobei die Ableiter (17, 18) eine Bodenplatte (20) aus einem elektrisch isolierenden Material durchragen und mehrere Temperierelemente (30) auf der Bodenplatte (20) aufsitzen.**

2. Akkupack nach Anspruch 1
**dadurch gekennzeichnet, dass** mehrere Temperierelemente (30) in einem gemeinsamen Träger (40) aus einem elektrisch isolierenden Material gehalten sind.

3. Akkupack nach Anspruch 2,
**dadurch gekennzeichnet, dass** die Kanäle (42, 43) des Temperierkreislaufs (44) zwischen dem Träger (40) und der Bodenplatte (20) ausgebildet sind.

4. Akkupack nach Anspruch **3,**
**dadurch gekennzeichnet, dass** der im Träger (40) ausgebildete Kanalteil (60) zur Bodenplatte (20) hin offen ist und im Querschnitt eine etwa V- bis U-förmige Gestalt hat.

5. Akkupack nach Anspruch **4**,
**dadurch gekennzeichnet, dass** die Bodenplatte (20) den Kanalteil (60) im Träger (40) dichtend verschließt.

6. Akkupack nach einem der Ansprüche 1 bis **5**,
**dadurch gekennzeichnet, dass** der hohle Grundkörper eines Temperierelementes (30) auf einer Stirnseite (36) einen Medium zuführenden Einlass (38) und auf der anderen Stirnseite (35) einen Medium abführenden Auslass (39) aufweist.

7. Akkupack nach einem der Ansprüche 1 bis **6**,
**dadurch gekennzeichnet, dass** die Einlässe (38) einer Reihe (22, 23) von nebeneinanderliegenden Temperierelementen (30) parallel von einem gemeinsamen Zuführkanal (42) gespeist werden.

8. Akkupack nach einem der Ansprüche 1 bis **6**,
**dadurch gekennzeichnet, dass** die Auslässe (39) einer Reihe (22, 23) von nebeneinanderliegenden Temperierelementen (30) parallel in einen gemeinsamen Abführkanal (43) münden.

9. Akkupack nach einem der Ansprüche 1 bis **8**,
**dadurch gekennzeichnet, dass** die Auslässe (39) aller Temperierelemente (30) in einen gemeinsamen Abführkanal (43) münden.

10. Akkupack nach einem der Ansprüche 1 bis **9**,
**dadurch gekennzeichnet, dass** ein Kanalabschnitt (55) des Temperierkreislaufs (44) den Auslass (39) eines Temperierelementes (30) mit dem Einlass (38) eines benachbarten Temperierelementes (30) verbindet.

11. Akkupack nach einem der Ansprüche 1 bis **6**,
**dadurch gekennzeichnet, dass** die Temperierelemente (30) zusammen mit den Kanalabschnitten (55) einen mäanderförmig verlaufenden Temperierkreislauf (44) ausbilden, der einen Medium zuführenden Anschluss mit einem Medium abführenden Anschluss verbindet.

12. Akkupack nach einem der Ansprüche 1 bis **11**,
**dadurch gekennzeichnet, dass** das Material des Trägers (40) und/oder das Material der Bodenplatte (20) aus Kunststoff besteht.

13. Akkupack nach einem der Ansprüche 1 bis **12**,
**dadurch gekennzeichnet, dass** die Grundkörper (29) der Temperierelemente (30) in den Träger (40) eingespritzt sind.

14. Akkupack nach einem der Ansprüche 1 bis **13**,
**dadurch gekennzeichnet, dass** die Grundkörper (29) der Temperierelemente (30) zur Bodenplatte (20) hin offen sind.

15. Akkupack nach Anspruch **14**,
**dadurch gekennzeichnet, dass** sich die Grundkörper (29) der Temperierelemente (30) zur Bodenplatte (20) hin erweitern.

16. Akkupack nach Anspruch **14** oder **15**,
**dadurch gekennzeichnet, dass** ein an der Bodenplatte (20) vorgesehener Steg (26) in den offenen Grundkörper (29) eines Temperierelementes (30) eingreift, insbesondere dichtend eingreift.

17. Akkupack nach einem der Ansprüche 1 bis **16**,
**dadurch gekennzeichnet, dass** das Temperierelement (30) aus Aluminium besteht.

18. Akkupack nach einem der Ansprüche 1 bis **17**,
**dadurch gekennzeichnet, dass** das Temperierelement (30) als Kontaktbrücke die elektrische Verbindung zwischen zwei Ableitern (17, 18) herstellt.

## Claims

1. Battery pack, comprising a plurality of individual battery cells (5), in particular flat battery cells (6), each of which has a cathode arrester (17) and an anode arrester (18), wherein two arresters (17, 18) each of adjacent battery cells (5, 6) are connected to one another in an electrically conductive manner, wherein one arrester (17, 18) bears against an electrically conductive tempering element (30) and the base body (29) of the tempering element (30) is hollow,
**characterised in that** several tempering elements (30), together with electrically insulating passage sections, form a common tempering circuit (44), wherein the arresters (17, 18) pass through a base plate (20) of an electrically insulating material and several tempering elements (30) sit on the base plate (20).

2. Battery pack according to claim 1,
**characterised in that** several tempering elements (30) are held in a common carrier (40) made of an electrically insulating material.

3. Battery pack according to claim 2,
**characterised in that** the passages (42, 43) of the tempering circuit (44) are formed between the carrier (40) and the base plate (20).

4. Battery pack according to claim 3,
**characterised in that** the passage section (60) formed in the carrier (40) is open towards the base plate (20) and has an approximately V- to U-shaped cross-section.

5. Battery pack according to claim 4,
**characterised in that** the base plate (20) tightly seals the passage section (60) in the carrier (40).

6. Battery pack according to any of claims 1 to 5,
**characterised in that** the hollow base body of a tempering element (30) has an inlet (38) supplying medium at one end face (36) and an outlet (39) discharging medium at the other end face (35).

7. Battery pack according to any of claims 1 to 6,
**characterised in that** the inlets (38) of a row (22, 23) of adjacent tempering elements (30) are fed in parallel by a common feed passage (42).

8. Battery pack according to any of claims 1 to 6,
**characterised in that** the outlets (39) of a row (22, 23) of adjacent tempering elements (30) terminate in parallel into a common discharge passage (43).

9. Battery pack according to any of claims 1 to 8,
**characterised in that** the outlets (39) of all tempering elements (30) terminate into a common discharge passage (43).

10. Battery pack according to any of claims 1 to 9,
**characterised in that** a passage section (55) of the tempering circuit (44) connects the outlet (39) of one tempering element (30) to the inlet (38) of an adjacent tempering element (30).

11. Battery pack according to any of claims 1 to 6,
**characterised in that** the tempering elements (30), together with the passage section (55), form a meandering tempering circuit (44), which connects a medium-feeding port to a medium-discharging port.

12. Battery pack according to any of claims 1 to 11,
**characterised in that** the material of the carrier (40) and/or the material of the base plate (20) is a plastic material.

13. Battery pack according to any of claims 1 to 12,
**characterised in that** the base bodies (29) of the tempering elements (30) are incorporated into the carrier (40) by injection moulding.

14. Battery pack according to any of claims 1 to 13,
**characterised in that** the base bodies (29) of the tempering elements (30) are open towards the base plate (20).

15. Battery pack according to claim 14,
**characterised in that** the base bodies (29) of the tempering elements (30) expand towards the base plate (20).

16. Battery pack according to claim 14 or 15,
**characterised in that** a web (26) provided on the base plate (20) engages, in particular while forming a seal, with the open base body (29) of a tempering element (30).

17. Battery pack according to any of claims 1 to 16,
**characterised in that** the tempering element (30) is made of aluminium.

18. Battery pack according to any of claims 1 to 17,
**characterised in that** the tempering element (20), acting as a contact bridge, establishes the connection between two arresters (17, 18).

## Revendications

1. Batterie composée de plusieurs éléments de batterie individuels (5), en particulier des éléments de batterie plats (6), qui comportent chacun un conducteur cathodique (17) et un conducteur anodique (18), étant précisé que deux conducteurs (17, 18) d'éléments (5, 6) voisins sont reliés entre eux de manière conductrice d'électricité, étant précisé qu'un conducteur (17, 18) est appliqué contre un élément de thermorégulation (30) conducteur d'électricité et que le corps principal (29) de l'élément de thermorégulation (30) est creux,
**caractérisée en ce que** plusieurs éléments de thermorégulation (30) forment avec des tronçons de conduit isolantes électriquement un circuit de thermorégulation commun (44), étant précisé que les conducteurs (17, 18) traversent une plaque de base (20) en matériau isolant électriquement, et que plusieurs éléments de thermorégulation (30) sont posés sur la plaque de base (20).

2. Batterie selon la revendication 1,
**caractérisée en ce que** plusieurs éléments de thermorégulation (30) sont contenus dans un support commun (40) en matériau isolant électriquement.

3. Batterie selon la revendication 2,
**caractérisée en ce que** les conduits (42, 43) du circuit de thermorégulation (44) sont formés entre le support (40) et la plaque de base (20).

4. Batterie selon la revendication 3,
**caractérisée en ce que** la partie de conduit (60) formée dans le support (40) est ouverte en direction de la plaque de base (20) et présente en coupe transversale une forme située à peu près entre un V et un U.

5. Batterie selon la revendication 4,
**caractérisée en ce que** la plaque de base (20) ferme de manière étanche la partie de conduit (60) dans le support (40).

6. Batterie selon l'une des revendications 1 à 5,
**caractérisée en ce que** le corps principal creux d'un élément de thermorégulation (30) comporte sur un côté frontal (36) une entrée (38) qui amène un fluide, et sur l'autre côté frontal (35) une sortie (39) qui évacue un fluide.

7. Batterie selon l'une des revendications 1 à 6,
**caractérisée en ce que** les entrées (38) d'une rangée (22, 23) d'éléments de thermorégulation (30) juxtaposés sont alimentées parallèlement par un conduit d'amenée commun (42).

8. Batterie selon l'une des revendications 1 à 6,
**caractérisée en ce que** les sorties (39) d'une rangée (22, 23) d'éléments de thermorégulation (30) juxtaposés débouchent parallèlement dans un conduit d'évacuation commun (43).

9. Batterie selon l'une des revendications 1 à 8,
**caractérisée en ce que** les sorties (39) de tous les éléments de thermorégulation (30) débouchent dans un conduit d'évacuation commun (43).

10. Batterie selon l'une des revendications 1 à 9,
**caractérisée en ce qu'**un tronçon de conduit (55) du circuit de thermorégulation (44) relie la sortie (39) d'un élément de thermorégulation (30) à l'entrée (38) d'un élément de thermorégulation (30) voisin.

11. Batterie selon l'une des revendications 1 à 6,
**caractérisée en ce que** les éléments de thermorégulation (30) forment avec les tronçons de conduit (55) un circuit de thermorégulation sinueux (44) qui relie un raccordement amenant un fluide à un raccordement évacuant un fluide.

12. Batterie selon l'une des revendications 1 à 11,
**caractérisée en ce que** le matériau du support (40) et/ou le matériau de la plaque de base (20) se composent de matière plastique.

13. Batterie selon l'une des revendications 1 à 12,
**caractérisée en ce que** les corps principaux (29) des éléments de thermorégulation (30) sont injectés dans le support (40).

14. Batterie selon l'une des revendications 1 à 13,
**caractérisée en ce que** les corps principaux (29) des éléments de thermorégulation (30) sont ouverts en direction de la plaque de base (20).

15. Batterie selon la revendication 14,
**caractérisée en ce que** les corps principaux (29) des éléments de thermorégulation (30) s'élargissent en direction de la plaque de base (20).

16. Batterie selon la revendication 14 ou 15,
**caractérisée en ce qu'**une nervure (26) prévue sur la plaque de base (20) pénètre, en particulier de manière étanche, dans le corps de base ouvert (29) d'un élément de thermorégulation (30).

17. Batterie selon l'une des revendications 1 à 16,
**caractérisée en ce que** l'élément de thermorégulation (30) se compose d'aluminium.

18. Batterie selon l'une des revendications 1 à 17,
**caractérisée en ce que** l'élément de thermorégulation (30) réalise comme pont la liaison électrique entre deux conducteurs (17, 18).
